# EUROPEAN PATENT APPLICATION

(11) **EP 4 841 600 A1**
(43) Date of publication of application: **18.11.2026**
(21) Application number: 26164737.4
(22) Date of filing: 13.03.2026
(51) Int. Cl.: G07G 1/00

(54) **AGENTIC AI ASSISTED CHECK OUT ENABLER**

(30) Priority: 15.05.2025 IN 202521046740
(71) Applicant: Tata Consultancy Services Limited, Maharashtra (IN)
(72) Inventor: THIRUNAVUKKARASU, Jeisobers, 600058 Chennai, Tamil Nadu (IN); BALRAJ, Srjana, 1082 Amsterdam (NL); THANGAVEL, Vaira Muthu, 600017 Chennai, Tamil Nadu (IN); ULAGANATHAN, Selva Ganapathy, 603103 Chennai, Tamil Nadu (IN); KUMAR, Hareesh, 600017 Chennai, Tamil Nadu (IN); UMAKESAN, Sivanesh, 560009 Bangalore, Karnataka (IN)
(74) Representative: Goddar, Heinz J.

(57) **Abstract**

In retail, with increase in contactless services such as self-checkout, hybrid checkout and mobile checkout and the like, these touchpoints have become the potential areas for fraudulent activity. Determining whether an action was (i) genuinely fraudulent or (ii) simply an error or (iii) an unusual but genuine transaction requires understanding the intent behind the action, which is often difficult to find out. A suspicious pattern for one type of transaction for a customer might be normal for another, thus the context of the transaction is important. Embodiments of the present disclosure provide a method and system for approving a customer shopping cart/shopping basket for checkout through deriving the intention of customer specific to a context by leveraging contextual embedding techniques. In addition, reasons for suspect are identified to provide real-time suggestions and take appropriate action as per the suggestion by using an agentic Artificial Intelligence (AI) framework.

## Description

### CROSS-REFERENCE TO RELATED APPLICATIONS AND PRIORITY

The present application claims priority to Indian application no. 202521046740, filed on May 15, 2025.

### TECHNICAL FIELD

The disclosure herein generally relates to retail, and, more particularly, to agentic AI assisted check out enabler.

### BACKGROUND

In retail, shrinkage in brick-and-mortar stores is one of the major problems faced by retailers. Shrinkage is the loss of inventory that can be attributed to factors such as employee theft, shoplifting, item switching, bypassing the scanning process, weight manipulation, administrative error, vendor fraud, damage, and cashier error. Shrinkage is a $100B problem for retailers. One of the major factors contributing to shrinkage is theft/shoplifting. Approximately 40% of retail shrinkage is attributed to external theft and another 30% due to internal theft. Retailers have been implementing additional control measures through investment in various in-store technologies such as security cameras, alert sensors, Radio Frequency identifier (RFID) tags, etc. Many artificial intelligences (AI)/ machine learning (ML) based Point of Sale (PoS) systems have also been piloted to detect price swapping and malpractices during item scanning. According to the National Retail Federation's 2022 Retail Security Survey, shoplifting/theft still continues to be an $100B problem for retailers.

Post pandemic, retailers are adopting more contactless services such as self-checkout, hybrid checkout, mobile checkout, and the like. With the increase in self-checkout kiosks at store, these touchpoints have become the potential areas for fraudulent activity. Fraud detection is inherently subjective as there is no proven behavioral science explaining the mechanism. Understanding customer intention to purchase is critical to prevent fraudulent during checkouts at Point-Of-Sale (POS) terminals. Determining whether an action was (i) genuinely fraudulent, (ii) simply an error or (iii) an unusual but genuine transaction requires understanding the intent behind the action, which is often difficult to find out. Conventionally, video analytics and visual analytics tools have been developed and used to detect and minimize fraudulent activities at the POS terminals. However, such approaches do not provide reasons behind suspect and they do not provide real-time suggestions to monitor and take appropriate action(s) as per the suggestion.

### SUMMARY

Embodiments of the present disclosure present technological improvements as solutions to one or more of the above-mentioned technical problems recognized by the inventors in conventional systems.

For example, in one aspect, there is provided a processor implemented method for agentic Artificial Intelligence (AI) assisted checkout enabler. The method comprises identifying, by using one or more customer recognition techniques via one or more hardware processors, one or more customers in a retail store; obtaining, via the one or more hardware processors, one or more historical baskets and one or more current baskets associated with the one or more identified customers; applying, via the one or more hardware processors, one or more context specific filtering techniques on the one or more historical baskets based on one or more associated dynamic factor dimensions to obtain one or more filtered historical baskets; applying, via the one or more hardware processors, one or more contextual embedding techniques on content of the one or more filtered historical baskets and the one or more current baskets associated with the one or more identified customers to obtain dynamically enriched content for the one or more filtered historical baskets and the one or more current baskets; determining, via the one or more hardware processors, a dynamic contextual similarity between each pair amongst the one or more filtered historical baskets with the dynamically enriched content in which a contextual similarity varies based on an associated nature of the dynamically enriched content, to obtain one or more determined dynamic contextual similarities; deriving, via the one or more hardware processors, a customer specific contextual similarity distribution of the one or more filtered historical baskets based on the one or more determined dynamic contextual similarities; deriving, via the one or more hardware processors, a threshold based on an associated nature of the customer specific contextual similarity distribution; passing the threshold, via the one or more hardware processors, to one or more model based reflex agents to act as a plurality of agent rules for detection of a suspicious activity during a checkout of the one or more current baskets associated with the one or more identified customers; identifying, by using a first set of agents via the one or more hardware processors, the suspicious activity in at least one current basket associated with at least one identified customer from an outcome of the one or more model based reflex agents in which the one or more model based reflect agents suspect the at least one current basket based on a deviation level between the at least one current basket and the one or more historical filtered baskets as compared with the threshold; performing, by using a second set of agents via the one or more hardware processors, a comparison of (i) an enriched content associated with the at least one current basket suspected by the one or more model based reflex agents with (ii) a reference enriched content of the one or more historical filtered baskets by using one or more reasoning models; generating, by using a third set of agents via the one or more hardware processors, an explanation report indicating reasons for the suspicious activity based on the comparison by employing the reasoning model in which the explanation report indicates the reasons in the form of at least one of a suspected item, a suspected price, a quantity of suspected item, or in combinations thereof; monitoring, by using a fourth set of agents via the one or more hardware processors, a particular point of scanning comprising a scanning of the suspected item, the quantity of suspected item, the suspected price or combinations thereof; and receiving, by using one or more learning agents, a plurality of information comprising suspected basket specific explanation report and an associated customer profile, one or more historical transactions, one or more suspicious report from one or more video anomalies detection systems, and one or more repositories of one or more historical suspected cases, one or more actions taken against each of the one or more historical suspected cases and one or more associated customer profiles, and dynamically deciding, to enable at least one of (i) performing one or more appropriate tasks that depend on nature of reasons for suspect in association with a different source of received information, and (ii) recommending a cancelation of the transaction based on nature of severity of reasons.

In an embodiment, a variance of the customer specific contextual similarity distribution is minimized, and a mean of the customer specific contextual similarity distribution is maximized by applying (i) one or more filtering techniques on the one or more historical baskets with respect to one or more associated context dimensions and (ii) enriching the content of the one or more filtered historical baskets and at least one current basket using the one or more contextual embedding techniques.

In an embodiment, the step of monitoring is based on one or more associated temporal factors with one or more dynamic formats comprising at least a date, a day, time, a location, and one or more weather conditions.

In an embodiment, an increase in the mean and a decrease in the variance of the customer specific contextual similarity distribution indicates an increase in quality level of an intent associated with a visit to the retail store by the one or more identified customers.

In an embodiment, wherein accuracy of explanation report with reasons for suspect is improved by increasing in quality level of an intent associated with the visit to the retail store by the one or more identified customers by enriching the content of (a) the one or more filtered historical baskets and (b) the at least one current basket by using the one or more contextual embeddings techniques.

In an embodiment, the one or more dynamic formats of the one or more associated temporal factors comprise at least one of one or more weekdays, one or more weekends, a morning, an evening, a hot climate, and a cold climate.

In another aspect, there is provided a processor implemented system for implementing an agentic Artificial Intelligence (AI) assisted checkout enabler. The system comprises: a memory storing instructions; one or more communication interfaces; and one or more hardware processors coupled to the memory via the one or more communication interfaces, wherein the one or more hardware processors are configured by the instructions to identify, by using one or more customer recognition techniques, one or more customers in a retail store; obtain one or more historical baskets and one or more current baskets associated with the one or more identified customers; apply one or more context specific filtering techniques on the one or more historical baskets based on one or more associated dynamic factor dimensions to obtain one or more filtered historical baskets; apply one or more contextual embedding techniques on content of the one or more filtered historical baskets and the one or more current baskets associated with the one or more identified customers to obtain dynamically enriched content for the one or more filtered historical baskets and the one or more current baskets; determine a dynamic contextual similarity between each pair amongst the one or more filtered historical baskets with the dynamically enriched content in which a contextual similarity varies based on an associated nature of the dynamically enriched content, to obtain one or more determined dynamic contextual similarities; derive a customer specific contextual similarity distribution of the one or more filtered historical baskets based on the one or more determined dynamic contextual similarities; derive a threshold based on an associated nature of the customer specific contextual similarity distribution; pass the threshold to one or more model based reflex agents to act as a plurality of agent rules for detection of a suspicious activity during a checkout of the one or more current baskets associated with the one or more identified customers; identify, by using a first set of agents, the suspicious activity in at least one current basket associated with at least one identified customer from an outcome of the one or more model based reflex agents in which the one or more model based reflect agents suspect the at least one current basket based on a deviation level between the at least one current basket and the one or more historical filtered baskets as compared with the threshold; perform, by using a second set of agents, a comparison of (i) an enriched content associated with the at least one current basket suspected by the one or more model based reflex agents with (ii) a reference enriched content of the one or more historical filtered baskets by using one or more reasoning models; generate, by using a third set of agents, an explanation report indicating reasons for the suspicious activity based on the comparison by employing the reasoning model in which the explanation report indicates the reasons in the form of at least one of a suspected item, a suspected price, a quantity of suspected item, or in combinations thereof; monitor, by using a fourth set of agents, a particular point of scanning comprising a scanning of the suspected item, the quantity of suspected item, the suspected price or combinations thereof; and receive, by using one or more learning agents, a plurality of information comprising suspected basket specific explanation report and an associated customer profile, one or more historical transactions, one or more suspicious report from one or more video anomalies detection systems, and one or more repositories of one or more historical suspected cases, one or more actions taken against each of the one or more historical suspected cases and one or more associated customer profiles, and dynamically decide, to enable at least one of (i) performing one or more appropriate tasks that depend on nature of reasons for suspect in association with a different source of received information, and (ii) recommending a cancelation of the transaction based on nature of severity of reasons.

In an embodiment, a variance of the customer specific contextual similarity distribution is minimized, and a mean of the customer specific contextual similarity distribution is maximized by applying (i) one or more filtering techniques on the one or more historical baskets with respect to one or more associated context dimensions and (ii) enriching the content of the one or more filtered historical baskets and at least one current basket using the one or more contextual embedding techniques.

In an embodiment, the step of monitoring is based on one or more associated temporal factors with one or more dynamic formats comprising at least a date, a day, time, a location, and one or more weather conditions.

In an embodiment, an increase in the mean and a decrease in the variance of the customer specific contextual similarity distribution indicates an increase in quality level of an intent associated with a visit to the retail store by the one or more identified customers.

In an embodiment, accuracy of explanation report with reasons for suspect is improved by increasing in quality level of an intent associated with the visit to the retail store by the one or more identified customers by enriching the content of (a) the one or more filtered historical baskets and (b) the at least one current basket by using the one or more contextual embeddings techniques.

In an embodiment, the one or more dynamic formats of the one or more associated temporal factors comprise at least one of one or more weekdays, one or more weekends, a morning, an evening, a hot climate, and a cold climate.

In yet another aspect, there are provided one or more non-transitory machine-readable information storage mediums comprising one or more instructions which when executed by one or more hardware processors cause implementing an agentic Artificial Intelligence (AI) assisted checkout enabler by identifying, by using one or more customer recognition techniques, one or more customers in a retail store; obtaining one or more historical baskets and one or more current baskets associated with the one or more identified customers; applying one or more context specific filtering techniques on the one or more historical baskets based on one or more associated dynamic factor dimensions to obtain one or more filtered historical baskets; applying one or more contextual embedding techniques on content of the one or more filtered historical baskets and the one or more current baskets associated with the one or more identified customers to obtain dynamically enriched content for the one or more filtered historical baskets and the one or more current baskets; determining a dynamic contextual similarity between each pair amongst the one or more filtered historical baskets with the dynamically enriched content in which a contextual similarity varies based on an associated nature of the dynamically enriched content, to obtain one or more determined dynamic contextual similarities; deriving a customer specific contextual similarity distribution of the one or more filtered historical baskets based on the one or more determined dynamic contextual similarities; deriving a threshold based on an associated nature of the customer specific contextual similarity distribution; passing the threshold to one or more model based reflex agents to act as a plurality of agent rules for detection of a suspicious activity during a checkout of the one or more current baskets associated with the one or more identified customers; identifying, by using a first set of agents, the suspicious activity in at least one current basket associated with at least one identified customer from an outcome of the one or more model based reflex agents in which the one or more model based reflect agents suspect the at least one current basket based on a deviation level between the at least one current basket and the one or more historical filtered baskets as compared with the threshold; performing, by using a second set of agents, a comparison of (i) an enriched content associated with the at least one current basket suspected by the one or more model based reflex agents with (ii) a reference enriched content of the one or more historical filtered baskets by using one or more reasoning models; generating, by using a third set of agents, an explanation report indicating reasons for the suspicious activity based on the comparison by employing the reasoning model in which the explanation report indicates the reasons in the form of at least one of a suspected item, a suspected price, a quantity of suspected item, or in combinations thereof; monitoring, by using a fourth set of agents, a particular point of scanning comprising a scanning of the suspected item, the quantity of suspected item, the suspected price or combinations thereof; and receiving, by using one or more learning agents , a plurality of information comprising suspected basket specific explanation report and associated customer profile, one or more historical transactions, one or more suspicious report from one or more video anomalies detection systems, and one or more repositories of one or more historical suspected cases, one or more actions taken against each of the one or more historical suspected cases and one or more associated customer profiles, and dynamically deciding, to enable at least one of (i) performing one or more appropriate tasks that depend on nature of reasons for suspect in association with a different source of received information, and (ii) recommending a cancelation of the transaction based on nature of severity of reasons.

In an embodiment, a variance of the customer specific contextual similarity distribution is minimized, and a mean of the customer specific contextual similarity distribution is maximized by applying (i) one or more filtering techniques on the one or more historical baskets with respect to one or more associated context dimensions and (ii) enriching the content of the one or more filtered historical baskets and at least one current basket using the one or more contextual embedding techniques.

In an embodiment, the step of monitoring is based on one or more associated temporal factors with one or more dynamic formats comprising at least a date, a day, time, a location, and one or more weather conditions.

In an embodiment, an increase in the mean and a decrease in the variance of the customer specific contextual similarity distribution indicates an increase in quality level of an intent associated with a visit to the retail store by the one or more identified customers.

In an embodiment, accuracy of explanation report with reasons for suspect is improved by increasing in quality level of an intent associated with the visit to the retail store by the one or more identified customers by enriching the content of (a) the one or more filtered historical baskets and (b) the at least one current basket by using the one or more contextual embeddings techniques.

In an embodiment, the one or more dynamic formats of the one or more associated temporal factors comprise at least one of one or more weekdays, one or more weekends, a morning, an evening, a hot climate, and a cold climate.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 depicts an exemplary system for implementing an agentic Artificial Intelligence (AI) assisted checkout enabler, in accordance with an embodiment of the present disclosure.
FIGS. 2A and 2B depict an exemplary flow chart illustrating a method for implementing an agentic Artificial Intelligence (AI) assisted check out enabler, using the system of FIG. 1, in accordance with an embodiment of the present disclosure.
FIG. 3 depicts different levels of hierarchy of an item that capture usual customer intention during item shopping and visit in the retail store, in accordance with an embodiment of the present disclosure.
FIG. 4 illustrates a graphical representation of minimizing a variance and maximizing a mean of a cosine similarity distribution associated with various filtered historical baskets, in accordance with an embodiment of the present disclosure.
FIG. 5 depicts a block diagram illustrating maximizing accuracy of captured customer intention through a feedback mechanism, in accordance with an embodiment of the present disclosure.
FIG. 6 depicts a graphical representation illustrating monitoring an improvement in an accuracy of captured customer intention, in accordance with an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In retail, understanding industry trends with respect to customer purchases and their intention to purchase is critical to prevent fraudulent during checkouts at Point-Of-Sale (POS) terminals. Conventionally, video analytics and visual analytics tools have been developed and used to detect and minimize fraudulent activities at the POS terminals. Customers have to accept that they are also being monitored and sometimes exposed to security checks, such as a partial re-scan by a staff member. However, such approaches are hard to force on individuals as these tend to "incriminating" them upfront and are prone to errors as these do not provide real-time suggestions to monitor and take appropriate action(s) as per the suggestion.

Present disclosure provides a system and a method that predicts fraudulent of a cart at a checkout kiosk based on the type of items/category picked in association with the context. This enables the system to alert and preempt fraud at checkout kiosks. The system further generates an explanation reporting with reasons for suspect of fraud during check-out. The reliability of the reasons is improved by the system and method of the present disclosure by enriching context and enriching the shopper intent by using one or more Generative Artificial Intelligence (GenAI) model(s) through feedback mechanisms.

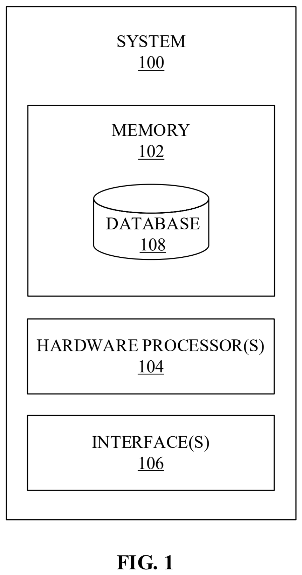

Referring now to the drawings, and more particularly to FIGS. 1 through 6, where similar reference characters denote corresponding features consistently throughout the figures, there are shown preferred embodiments, and these embodiments are described in the context of the following exemplary system and/or method.

FIG. 1 depicts an exemplary system 100 for implementing an agentic Artificial Intelligence (AI) assisted checkout enabler, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

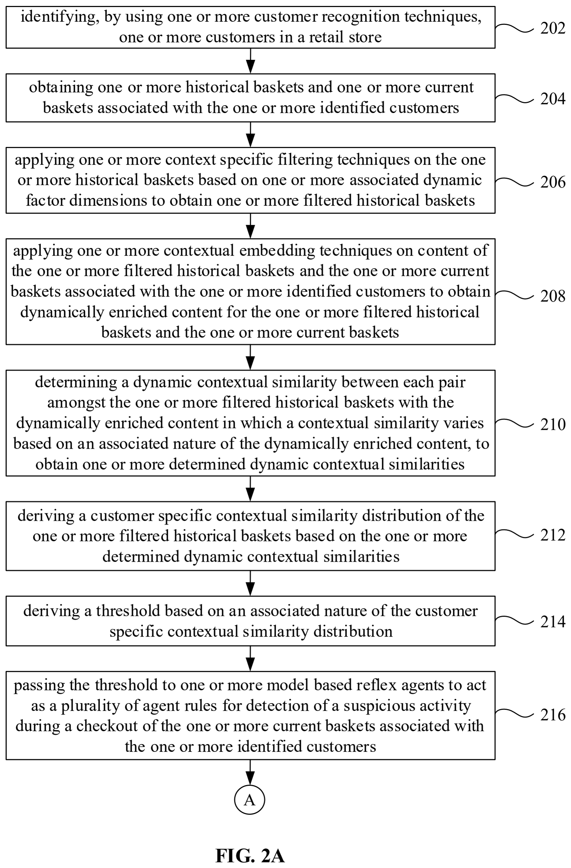

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to one or more customers in one or more retail stores, one or more historical baskets and one or more current baskets, and so on. The database 108 further comprises dynamically enriched content, one or more determined dynamic contextual similarities, customer specific contextual similarity distribution(s), one or more thresholds, explanation report indicating reasons for the suspicious activity, suspected items, quantity of suspected items, one or more associated temporal factors with one or more dynamic formats, and the like. The memory 102/database 108 stores one or more context specific filtering techniques, one or more contextual embedding techniques, one or more model based reflex agents, one or more sets of agents, one or more control agents, and the like which when invoked for execution by the system 100 enable to perform the method of FIGS. 2A-2B of the present disclosure. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

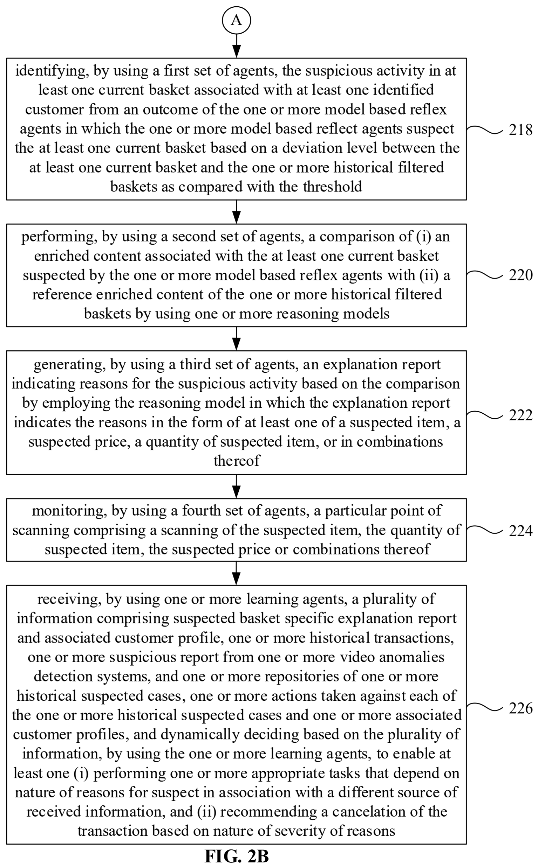

FIGS. 2A and 2B, with reference to FIG. 1, depict an exemplary flow chart illustrating a method for implementing an agentic Artificial Intelligence (AI) assisted check out enabler, using the system 100 of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, and the flow diagram as depicted in FIGS. 2A-2B. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practically feasible. Further, some steps may be performed simultaneously.

At step 202 of the method of the present disclosure, the one or more hardware processors 104 identify, by using one or more customer recognition techniques, one or more customers in a retail store. When one or more customers (also referred to as a customer/customers and interchangeably used herein) visit (or walks-in) to a retail store, he/she is identified through face recognition, and the like. When a shopper/user picks an item in a brick-and-mortar store (e.g., say a retail store, and the like) at a particular point of time, the item being shopped can be identified through numerous ways. For instance, as known in the art techniques such as image processing at the time of instore shopping, internet of things (IOT) sensor-based planograms as well as smart shopping carts, reading RFID tags, etc., may be used.

At step 204 of the method of the present disclosure, the one or more hardware processors 104 obtain one or more historical baskets and one or more current baskets associated with the one or more identified customers. Historical baskets of the customers are extracted and used to derive one or more temporal factors specific usual buying behavior of the customer and to derive one or more temporal factors specific customer usual intention. Different dimensions of one or more baskets are used to derive the intention of the customer. Some of the dimensions comprise but are not limited to, nature of items, nature of time frame, a nature of location, and the like. These dimensions are processed in one or more ways and converted into a textual format to enable derivation of intention of customer. It is assumed that each basket indicates customer intent for the trip and an overall content of all baskets of the customer indicate that customer intention at overall basis.

At step 206 of the method of the present disclosure, the one or more hardware processors 104 apply one or more context specific filtering techniques on the one or more historical baskets based on one or more associated dynamic factor dimensions to obtain one or more filtered historical baskets.

In an embodiment, the one or more associated temporal factors with one or more dynamic formats comprising at least a date, a day, time, a location, and one or more weather conditions.

In an embodiment, the one or more dynamic formats of the one or more associated temporal factors comprise at least one of one or more weekdays, one or more weekends, a morning, an evening, a hot climate, and a cold climate.

The step 206 is better understood by way of the following description:

Factor dimensions such as the time of entry by the customer to a store, location of the store and weather conditions are used to filter historical baskets of the identified customer. Historical baskets with similar factor dimensions such as similar timestamp, similar location, and similar weather conditions and the like are filtered. Factor dimensions may take different format such as weekdays, weekends, morning, evening and the like and ideal format of factor dimensions are used to filter historical baskets to obtain the one or more filtered historical baskets (also referred to as filtered historical baskets or filtered historical basket and interchangeably used herein).

When a shopper/user/customer picks an item in a brick-and-mortar store (e.g., say a retail store, and the like) at a particular point in time, the item being shopped can be identified through numerous ways. Other real time factors associated with the item such as the time when he/she shopped, the store demographics, weather condition, etc. are used to filter historical baskets. Each factor may take original value of the real time factor or derived value of real time factor, and they are commonly termed as different forms of factors. For instance, if the item is picked by a shopper at 8 AM on 1st of April 2023, it is enriched with additional derived information and stored as additional parameters. In the above example, the derived variables for an item shopped at '8 AM on 1st of April 2023' would be the day of the week (Saturday), day being a weekend, day being the first weekend as well as the first weekend (e.g., Saturday) of the month, time being the morning hours and the like and the factor is noted as different format of time factor. By same way, the other factors such as weather conditions, location of the store are also converted by considering their effect on buying behavior of shoppers. Below Table 1 depicts examples of additional derived variables pertaining to one or more items purchased by a user.

**Table 1**

| Time stamp | Day of the week | Weekend/Weekda y | Stage of the month | Winter/Summe r | ... | Part of the day |
|---|---|---|---|---|---|---|
| 2/4/23 8.23 AM | Saturda y | Weekend | First weeken d of the month | Winter weekend | ... | Monda y |
| 2/6/23 6:23 PM | Monday | Weekday | First weekda y of the month | Winter weekday | ... | Evenin g |
| ... | ... | ... | ... | ... | ... | ... |
| 2/14/2 3 1:23 PM | Tuesday | Weekday | Third weekda y of the month | Winter weekday | ... | Noon |

More specifically, the above Table 1 depicts different formats of real-time factors of a context associated with the user shopping cart/basket. Creation of derived variables enables the system 100 to determine the expected intention of the shopper as closest as possible though series of steps.

At step 208 of the method of the present disclosure, the one or more hardware processors 104 apply one or more contextual embedding techniques on content of the one or more filtered historical baskets and the one or more current baskets associated with the one or more identified customers to obtain dynamically enriched content for the one or more filtered historical baskets and the one or more current baskets.

The step 208 is better understood by way of the following description:

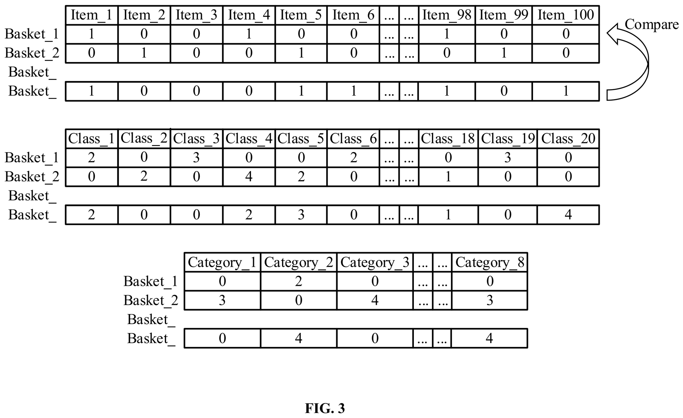

The content of the one or more filtered historical baskets is processed to derive the content in textual format. Images and videos of each item in the one or more filtered historical baskets are processed into textual format to enable further processing. The content of filtered historical baskets in textual format are further applied with one or more data processing technique(s) such as (a) contextual embedding techniques such as Bidirectional Encoder Representations from Transformers (BERT) and (b) Named Entity Recognition (NER) (c) ideal item hierarchical mapping, and the like to enrich the content information and to capture customer intention as closer as possible. The above techniques are better understood by way of the following description:
(a) Contextual embeddings are generated using models that are trained on a large corpus of text data. One popular model for creating contextual embeddings is BERT (Bidirectional Encoder Representations from Transformers). BERT uses a transformer architecture, which processes words in relation to all the other words in a sentence, rather than one-by-one in order. This allows the system 100 to capture the full context of a word. By using context-specific embeddings, a machine learning model can more accurately understand and categorize products based on their descriptions. For instance, if a customer is buying 'cream' and the product description is "This cream is perfect for baking a cake," a contextual embedding model would understand that the product is likely to be a 'cooking cream' rather than a 'skin care cream.' This level of understanding is crucial for inferring the intention behind a customer's purchase when the product names alone might be ambiguous. When applied to shopping basket analysis, contextual embeddings can greatly enhance the model's ability to discern the intention behind the purchase of seemingly disparate items that might actually serve a similar purpose for the customer. This leads to more accurate capturing of customer intention.
(b) Named Entity Recognition (NER) is a subtask of information extraction that seeks to locate and classify named entities mentioned in unstructured text into predefined categories such as the names of items, persons, organizations, locations, expressions of times, quantities, monetary values, percentages, etc. Applied to shopping baskets, NER is used to extract item names and other relevant information. For example, consider an item description "16GB RAM for X brand laptop Pro." NER would help in identifying "16GB" as a quantity, "RAM" as an item type, and " X brand laptop Pro " as an item name. NER systems use machine learning algorithms, which are trained on annotated datasets where the named entities are labeled manually. Examples of algorithms for NER include but are not limited to Hidden Markov Models (HMMs), Conditional Random Fields (CRFs), neural network-based models like Long Short-Term Memory networks (LSTMs), and so on.
(c) Item hierarchical mapping - Based on level of hierarchy of the item classification, similarity between two items will vary and the level of hierarchy of the items needs to be decided based on the customer intention. Some items may capture customer intention(s) accurately if they are considered at a Stock Keeping Unit (SKU) level, and some items may capture customer intention accurately if they are considered at sub class level or class level, and the like. In an instance, milk with two brands is noted as two SKUs or two different items. Ideally the two SKUs need to be considered as the same item for finding similarity in terms of customer intention. Thus, as milk with two brands are considered as two different items at SKU level, the two items need to be considered at a higher level, in an instance at sub class level i.e., milk without brand differentiation which is one level higher in the hierarchy. It is decided by the system 100 through suitable feedback mechanism in which it is assumed that when optimum similarity is achieved between two baskets with specific items at ideal level of hierarchy, the two baskets with the processed text content have the optimal customer intention captured. FIG. 3, with reference to FIGS. 1 through 2B, depicts different levels of hierarchy of an item that capture the usual customer intention during item shopping and visit in the retail store, in accordance with an embodiment of the present disclosure.

At step 210 of the method of the present disclosure, the one or more hardware processors 104 determine a dynamic contextual similarity between each pair amongst the one or more filtered historical baskets with the dynamically enriched content in which a contextual similarity varies based on an associated nature of the dynamically enriched content, to obtain one or more determined dynamic contextual similarities.

At step 212 of the method of the present disclosure, the one or more hardware processors 104 derive a customer specific contextual similarity distribution of the one or more filtered historical baskets based on the one or more determined dynamic contextual similarities.

In an embodiment, a variance of the customer specific contextual similarity distribution is minimized, and a mean of the customer specific contextual similarity distribution is maximized by applying (i) one or more filtering techniques on the one or more historical baskets with respect to one or more associated context dimensions and (ii) enriching the content of the one or more filtered historical baskets and at least one current basket using the one or more contextual embedding techniques.

In an embodiment, an increase in the mean and a decrease in the variance of the customer specific contextual similarity distribution indicates an increase in the quality level of an intent associated with a visit to the retail store by the one or more identified customers.

The steps 210 and 212 are better understood by way of the following description:
If there are 'n' filtered historical baskets, then 'n' cosine similarity values are derived, and these 'n' cosine similarity values are used to derive cosine similarity distribution. In one instance, a contextual similarity is found between each pair of all filtered historical baskets and used to derive contextual similarity distribution. In another instance each basket is compared with an overall content of all baskets and cosine similarity is found and it is repeated for all baskets and thus 'n' cosine similarity values are derived.

It is to be noted that the contextual similarity needs to be derived in such a way that two baskets (e.g., filtered historical baskets) need to be compared with respect to true intention of the customer for the respective trips. Semantic/contextual/cosine similarity is used by the system 100 to compare two filtered historical baskets as semantic similarity is fundamental/critical while comparing pair wise filtered historical baskets that mimic the human understanding.

The central value of the cosine similarity distribution indicates consistency of customer intention, and it indicates how the customer varies across different trips made by him in the past. Variation of cosine similarity distribution indicates the reliability of consistency. It is to be noted that cosine similarity distribution may follow any distribution such as normal distribution and the like and its parameters such as a mean and a variance can be derived as per standard statistical procedures.

Customer intention captured in the filtered historical baskets is monitored through two criteria of contextual distribution. If the mean and the variance of contextual distribution is changed in desired direction it indicates that the quality of customer intention captured is moving in desired direction. More particularly, if the mean of contextual distribution increases, then the quality of customer intention increases and if the variance of contextual distribution decreases, then the quality of customer intention increases. Further, if similarity among historical baskets of a customer increases, it is noted that the system 100 is moving in the right direction in identifying the true intention of the customer. The logic can be explained with an example. For instance, an image with face of a famous/well known person belonging to an ethnic group is considered for explanation purpose. In the first instance, a part of the image particularly only eye of the image is selected and searched for suitable face matching the selected eye. Images suggested by a search engine are made into a group and termed as a first instance group. In the second instance, a part of the image, particularly nose portion of the image, is selected and searched for suitable face matching the selected nose. The images suggested by the search engine are grouped and termed as second instance group. In the third instance, both the nose portion of the image and eye portion of the image are considered for searching a suitable matching face. The images suggested by the search engine are grouped and termed as third instance group. In a fourth instance, a part of the image particularly skin color of the image is selected in addition to the eye selected in the first instance. This combination is used for searching a suitable face that matches with both selected eye and the skin color. The images suggested by the search engine are made into a group and termed as fourth instance group.

Similarity among the images of the first instant group is calculated using similarity determination techniques as known in the art such as cosine similarity, Structural Similarity Index (SSIM), Mean Squared Error (MSE), Root Mean Squared Error (RMSE), and the like. This is repeated for all the 4 groups. It is expected that the third instance group may have the highest similarity. This is due to the fact that eye and nose are the distinct attributes that improve homogeneity across images of the third group. While the fourth group may have lesser similarity compared to the third group due to the reason that, skin color may not be a useful attribute as compared to nose in deciding the face and it may act as a noise and may decrease the similarity of images for the fourth instance group. The other attributes similar to skin color which could act as noise are an eye glass, a face mask, etc.

Thus, the system 100 can arrive at a logic that if similarity among images increases, it is moving in the right direction in identifying the person under test. Same way, it leads to the logic that if similarity among filtered historical baskets of a customer increases, it is moving in the right direction in identifying the true intention of the customer. It is to be understood by a person having ordinary skill in the art or person skilled in the art that the above-mentioned examples of the similarity determination techniques shall not be construed as limiting the scope of the present disclosure.

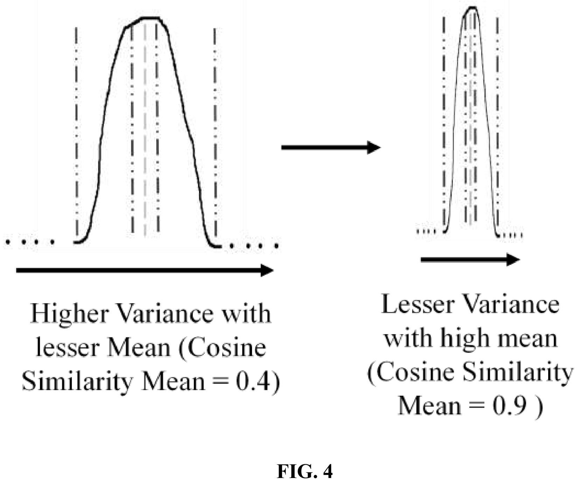

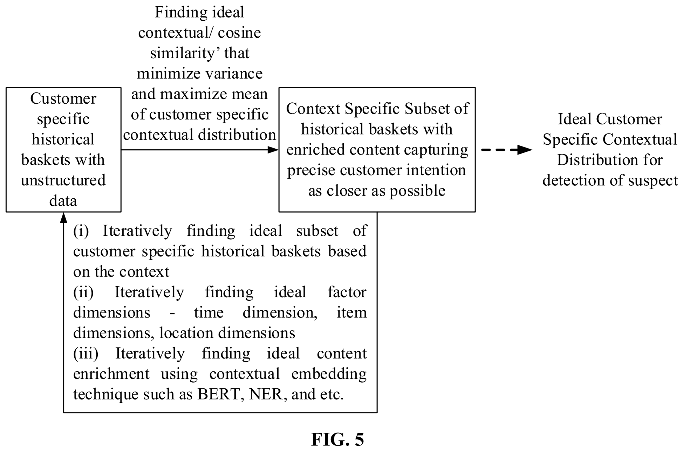

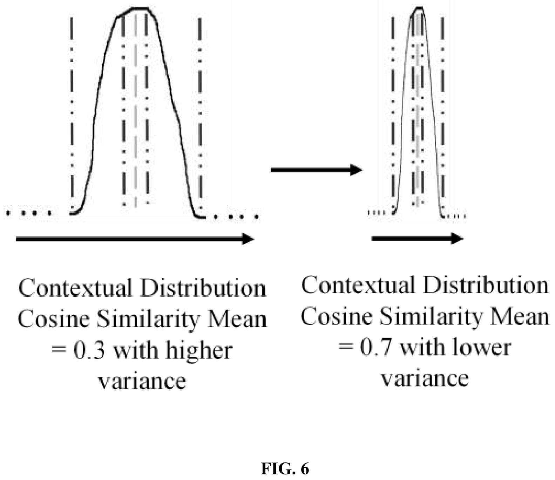

The key requirement is to more closely approximate human-level semantic understanding. Customer intention for each trip is measured through items picked during the trip and accuracy of intention is improved by applying different data processing techniques and the ideal data processing is identified by arriving at customer intention as closely as possible. It is arrived at by testing individually or in combination of (1) by applying filtering techniques on the filtered historical baskets with respect to different formats of temporal factors such as time, location, and the like, (2) enriching the content of filtered historical baskets using contextual embedding techniques and NER techniques, and (3) item hierarchical mapping to achieve minimization of variance of contextual distribution and maximization of mean of contextual distribution. It is assumed that when optimum similarity is achieved between two baskets, the two baskets with the processed text content have the optimal customer intention captured. FIG. 4, with reference to FIGS. 1 through 3, illustrates a graphical representation of minimizing a variance and maximizing a mean of a cosine similarity distribution associated with various filtered historical baskets, in accordance with an embodiment of the present disclosure. FIG. 5, with reference to FIGS. 1 through 4, depicts a block diagram illustrating maximizing accuracy of captured customer intention through a feedback mechanism, in accordance with an embodiment of the present disclosure. FIG. 6, with reference to FIGS. 1 through 5, depicts a graphical representation illustrating monitoring an improvement in an accuracy of captured customer intention, in accordance with an embodiment of the present disclosure.

At step 214 of the method of the present disclosure, the one or more hardware processors 104 derive a threshold based on an associated nature of the customer specific contextual similarity distribution. The cosine similarity distribution may follow any distribution such as normal distribution, and the like and its parameters such as the mean and the variance can be derived with reference to statistical procedures and further used to derive the threshold to validate behavior of customers such as usual or unusual. In one instance, mean ± 'm*standard deviation' (where value of 'm' is say '3', as a non-construing exemplary value) could be used as threshold to validate behavior of customers. If the current basket lies within the threshold, then it could be considered as usual behavior and if it lies outside the threshold then it could be considered as unusual behavior and magnitude of deviation from the usual behavior can be identified from the level of deviation.

The closeness of the test/current basket with items picked in real-time with respect to usual behavior of shopper is measured by considering contextual similarity and the contextual similarity between test/current basket and usual behavior is derived. If the measured value lies within a range as suggested by the contextual distribution and the test/current basket is assumed that it is allowed without any suspect. If the test/current basket lies outside the range then it is categorized under suspect (e.g., also referred to as basket under suspect or basket of probable suspicious activity).

At step 216 of the method of the present disclosure, the one or more hardware processors 104 pass the threshold to one or more model based reflex agents to act as a plurality of agent rules for detection of a suspicious activity during a checkout of the one or more current baskets associated with the one or more identified customers.

At step 218 of the method of the present disclosure, the one or more hardware processors 104 identify, by using a first set of agents, the suspicious activity in at least one current basket associated with at least one identified customer from an outcome of the one or more model based reflex agents in which the one or more model based reflect agents suspect the at least one current basket based on a deviation level between the at least one current basket and the one or more historical filtered baskets as compared with the threshold.

The steps 216 and 218 are better understood by way of the following description:
Four set of agents are categorized under multi-agent system (MAS), which is a group of artificial intelligence (AI) agents that work together to achieve a goal. The agents are configured by the system 100 to cooperate, compete, or coexist, and are involved within agentic framework to perform different tasks associated with suspicious activities during check out process. Few examples, for the actions taken by the agents are suspecting the current basket by the first set of agents, identifying reasons for suspect by the second set of agents, generating an explanation report by the third set of agents, monitoring for scanning of a particular suspected item by the fourth set of agents, and the like.

In the AI systems terminology, an agent is a software program that can interact with its environment, collect data, and that data is used to perform self-determined tasks to meet predetermined goals, for improving its performance through machine learning or by acquiring knowledge. Essentially, agentic AI is a framework, wherein AI agents are the building blocks within the framework. Agentic AI is the broader concept of solving issues with limited supervision, whereas an AI agent is a specific component within that system that is designed to handle tasks and processes with a degree of autonomy.

Contextual distribution with the threshold is used for tasks that are related with other system(s) or platform. For an instance, the output of the contextual distribution with the threshold may be linked through a suitable interface with an internal model which is one of the key components of model-based reflex agents to act in real time and make decisions. Model-based reflex agents use condition-action rules to make decisions and act in real-time, based on their perception of the environment. It represents a simple form of logic that dictates how the agent should respond to specific conditions in its environment. In general, rules for model based reflex agents can be derived from statistical distribution or learned from machine learning techniques. In the present disclosure, the contextual distribution with the threshold provides rule for suspecting a customer for ideal model which is key component of model based reflex agents to apply and react as per specific conditions in its environment such as time of purchase and its different dimensions namely month, week, day, etc., location of purchase, weather conditions and the like and thus it enables the system 100 to differentiate the usual behavior as compared with current behavior in terms of nature of items picked by the customer. If the test/current basket lies outside the threshold, then model based agent indicate suspicion about current basket to first set of agent of multi-agent system.

At step 220 of the method of the present disclosure, the one or more hardware processors 104 perform, by using a second set of agents, a comparison of (i) an enriched content associated with the at least one current basket suspected by the one or more model based reflex agents with (ii) a reference enriched content of the one or more historical filtered baskets by using one or more reasoning models.

At step 222 of the method of the present disclosure, the one or more hardware processors 104 generate, by using a third set of agents, an explanation report indicating reasons for the suspicious activity based on the comparison by employing the reasoning model in which the explanation report indicates the reasons in the form of at least one of a suspected item, a suspected price, a quantity of suspected item, or in combinations thereof.

In an embodiment, accuracy of explanation report with reasons for suspect is improved by increasing in a quality level of an intent associated with the visit to the retail store by the one or more identified customers by enriching the content of (a) the one or more filtered historical baskets and (b) the at least one current basket by using the one or more contextual embeddings techniques

The steps 220 and 222 are better understood by way of the following description:
Once the basket under suspect is located, then unstructured data of (i) test/current basket and (ii) filtered historical baskets capturing usual behavior are made into two files, and the content is enriched through the feedback mechanism. The enriched content of two files is passed by the second set of agents into a reasoning model (e.g., OpenAI o1, o3-mini, and/or the like) to identify the unique items that are different in the test/current basket and to provide explanation report by the third set of agents with reasons in the form of suspected item, suspected price, suspected quantity individually or in combination with each other. Reasoning models excel in complex problem solving, coding, scientific reasoning, and multi-step planning for agentic workflows. Examples for the reasoning model are but not limited to OpenAI o1,o3-mini, and the like which can perform complex reasoning.

When an item is added into a current basket in real time, the comparison with usual behavior is started and the comparison is performed in real-time as subsequent items are added in the baskets one by one until the last item is added in the basket. This enables the system 100 to validate the basket at the earliest and to take corrective measures at the earliest.

At step 224 of the method of the present disclosure, the one or more hardware processors 104 monitor, by using a fourth set of agents, a particular point of scanning comprising a scanning of the suspected item, the quantity of suspected item, the suspected price or combinations thereof. The fourth set of agents enable the system 100 to monitor closely for swiping of the particular item indicated by the third set of agents for suspect. In one instance, the system 100 enables monitoring by humans during video surveillance with suggestions closely for swiping of the particular item indicated by the third set of agents for suspect. In another instance, the agent may enable the system 100 to validate the invoice for inclusion of suspected item.

At step 226 of the method of the present disclosure, the one or more hardware processors 104 receive, by using one or more learning agents, a plurality of information comprising suspected basket specific explanation report and associated customer profile, one or more historical transactions, one or more suspicious report from one or more video anomalies detection systems, and one or more repositories of one or more historical suspected cases, one or more actions taken against each of the one or more historical suspected cases and one or more associated customer profiles and dynamically decide, to enable at least one of (i) performing one or more appropriate tasks that depend on nature of reasons for suspect in association with a different source of received information, and (ii) recommending a cancelation of the transaction based on nature of severity of reasons.

The step 226 is better understood by way of the following description:
The one or more learning agents receive through a suitable interface the explanation report specific to the suspected basket, an outcome of monitoring from the second set of agents and associated customer profiles, historical transactions, suspicious report(s) from other anomalies detection systems. The one or more learning agents are a type of AI agents that are configured to learn from past interactions and improve their performance. These learning agents utilize machine learning techniques as known in the art to analyze data, identify patterns, and make better decisions in the future. The one or more learning agents are also linked with a suitable interface with a historical repository of historical suspected cases, actions taken against each suspected cases and associated customer profile(s). Historical repository for suspected cases and associated actions is updated on continuous basis (or periodically) as basic knowledge repository to take appropriate action. The one or more learning agents may also receive information associated with suspicious activities from multiple sources and may review by considering holistic view and recommend appropriate action in real time based on nature of suspect in terms of type of item, type of price, type of quantity.

In a first scenario, the one or more learning agents may receive a suspicious report from video anomalies detection system based on video analysis which is deployed for suspecting customers based on their unusual actions and movement within the store. In a second scenario, the agents may receive the information from government security databases specific to local geography with insights into known shoplifter profiles. In a third instance, it may receive customer historical shoplifting histories within store. The one or more learning agents review the explanation report as the major source for appropriate action as it is the real-time report and takes one or more appropriate actions by considering the other information associated with current and the past. Thus, combining multiple signals, such as context specific customer intention in real time, historical purchase patterns and in-store actions, generate robust evidence to improve fraud detection accuracy.

The one or more learning agent analyse historical suspected cases including successful actions, identify patterns related with major reasons for successful suspect and make better decisions on appropriate action on current suspected case and the one or more appropriate actions may include, but are not limited to, whether allowing the current basket for seamless processing, marking the current customer profile for monitoring during future visits, stopping the current transaction entirely, etc.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:
identifying, by using one or more customer recognition techniques via one or more hardware processors, one or more customers in a retail store (202);
obtaining, via the one or more hardware processors, one or more historical baskets and one or more current baskets associated with the one or more identified customers (204);
applying, via the one or more hardware processors, one or more context specific filtering techniques on the one or more historical baskets based on one or more associated dynamic factor dimensions to obtain one or more filtered historical baskets (206);
applying, via the one or more hardware processors, one or more contextual embedding techniques on content of the one or more filtered historical baskets and the one or more current baskets associated with the one or more identified customers to obtain dynamically enriched content for the one or more filtered historical baskets and the one or more current baskets (208);
determining, via the one or more hardware processors, a dynamic contextual similarity between each pair amongst the one or more filtered historical baskets with the dynamically enriched content in which a contextual similarity varies based on an associated nature of the dynamically enriched content, to obtain one or more determined dynamic contextual similarities (210);
deriving, via the one or more hardware processors, a customer specific contextual similarity distribution of the one or more filtered historical baskets based on the one or more determined dynamic contextual similarities (212);
deriving, via the one or more hardware processors, a threshold based on an associated nature of the customer specific contextual similarity distribution (214);
passing the threshold, via the one or more hardware processors, to one or more model based reflex agents to act as a plurality of agent rules for detection of a suspicious activity during a checkout of the one or more current baskets associated with the one or more identified customers (216);
identifying, by using a first set of agents via the one or more hardware processors, the suspicious activity in at least one current basket associated with at least one identified customer from an outcome of the one or more model based reflex agents in which the one or more model based reflect agents suspect the at least one current basket based on a deviation level between the at least one current basket and the one or more historical filtered baskets as compared with the threshold (218);
performing, by using a second set of agents via the one or more hardware processors, a comparison of (i) an enriched content associated with the at least one current basket suspected by the one or more model based reflex agents with (ii) a reference enriched content of the one or more historical filtered baskets by using one or more reasoning models (220);
generating, by using a third set of agents via the one or more hardware processors, an explanation report indicating reasons for the suspicious activity based on the comparison by employing the reasoning model in which the explanation report indicates the reasons in the form of at least one of a suspected item, a suspected price, a quantity of suspected item, or in combinations thereof (222);
monitoring, by using a fourth set of agents via the one or more hardware processors, a particular point of scanning comprising a scanning of the suspected item, the quantity of suspected item, the suspected price or combinations thereof (224);
receiving, by using one or more learning agents via the one or more hardware processors, a plurality of information comprising suspected basket specific explanation report and associated customer profile, one or more historical transactions, one or more suspicious report from one or more video anomalies detection systems, and one or more repositories of one or more historical suspected cases, one or more actions taken against each of the one or more historical suspected cases and one or more associated customer profiles, and dynamically deciding based on the plurality of information, to enable at least one of (i) performing one or more appropriate tasks that depend on nature of reasons for suspect in association with a different source of received information, and (ii) recommending a cancelation of the transaction based on nature of severity of reasons (226).

2. The processor implemented method as claimed in claim 1, wherein
a variance of the customer specific contextual similarity distribution is minimized, and a mean of the customer specific contextual similarity distribution is maximized by applying (i) one or more filtering techniques on the one or more historical baskets with respect to one or more associated context dimensions and (ii) enriching the content of the one or more filtered historical baskets and at least one current basket using the one or more contextual embedding techniques, and
an accuracy of explanation report with reasons for suspect is improved by increasing in quality level of an intent associated with the visit to the retail store by the one or more identified customers by enriching the content of (a) the one or more filtered historical baskets and (b) the at least one current basket by using the one or more contextual embeddings techniques.

3. The processor implemented method as claimed in claim 1, wherein the step of monitoring is based on one or more associated temporal factors with one or more dynamic formats comprising at least a date, a day, time, a location, and one or more weather conditions.

4. The processor implemented method as claimed in claim 2, wherein an increase in the mean and a decrease in the variance of the customer specific contextual similarity distribution indicates an increase in quality level of an intent associated with a visit to the retail store by the one or more identified customers.

5. The processor implemented method as claimed in claim 3, wherein the one or more dynamic formats of the one or more associated temporal factors comprise at least one of one or more weekdays, one or more weekends, a morning, an evening, a hot climate, and a cold climate.

6. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
identify, by using one or more customer recognition techniques, one or more customers in a retail store;
obtain one or more historical baskets and one or more current baskets associated with the one or more identified customers;
apply one or more context specific filtering techniques on the one or more historical baskets based on one or more associated dynamic factor dimensions to obtain one or more filtered historical baskets;
apply one or more contextual embedding techniques on content of the one or more filtered historical baskets and the one or more current baskets associated with the one or more identified customers to obtain dynamically enriched content for the one or more filtered historical baskets and the one or more current baskets;
determine a dynamic contextual similarity between each pair amongst the one or more filtered historical baskets with the dynamically enriched content in which a contextual similarity varies based on an associated nature of the dynamically enriched content, to obtain one or more determined dynamic contextual similarities;
derive a customer specific contextual similarity distribution of the one or more filtered historical baskets based on the one or more determined dynamic contextual similarities;
derive a threshold based on an associated nature of the customer specific contextual similarity distribution;
pass the threshold to one or more model based reflex agents to act as a plurality of agent rules for detection of a suspicious activity during a checkout of the one or more current baskets associated with the one or more identified customers;
identify, by using a first set of agents, the suspicious activity in at least one current basket associated with at least one identified customer from an outcome of the one or more model based reflex agents in which the one or more model based reflect agents suspect the at least one current basket based on a deviation level between the at least one current basket and the one or more historical filtered baskets as compared with the threshold;
perform, by using a second set of agents, a comparison of (i) an enriched content associated with the at least one current basket suspected by the one or more model based reflex agents with (ii) a reference enriched content of the one or more historical filtered baskets by using one or more reasoning models;
generate, by using a third set of agents, an explanation report indicating reasons for the suspicious activity based on the comparison by employing the reasoning model in which the explanation report indicates the reasons in the form of at least one of a suspected item, a suspected price, a quantity of suspected item, or in combinations thereof;
monitor, by using a fourth set of agents, a particular point of scanning comprising a scanning of the suspected item, the quantity of suspected item, the suspected price or combinations thereof; and
receive, by using one or more learning agents, a plurality of information comprising suspected basket specific explanation report and associated customer profile, one or more historical transactions, one or more suspicious report from one or more video anomalies detection systems, and one or more repositories of one or more historical suspected cases, one or more actions taken against each of the one or more historical suspected cases and one or more associated customer profiles, and dynamically decide, to enable at least one of (i) performing one or more appropriate tasks that depend on nature of reasons for suspect in association with a different source of received information, and (ii) recommending a cancelation of the transaction based on nature of severity of reasons.

7. The system as claimed in claim 6, wherein
a variance of the customer specific contextual similarity distribution is minimized, and a mean of the customer specific contextual similarity distribution is maximized by applying (i) one or more filtering techniques on the one or more historical baskets with respect to one or more associated context dimensions and (ii) enriching the content of the one or more filtered historical baskets and at least one current basket using the one or more contextual embedding techniques, and
an accuracy of explanation report with reasons for suspect is improved by increasing in quality level of an intent associated with the visit to the retail store by the one or more identified customers by enriching the content of (a) the one or more filtered historical baskets and (b) the at least one current basket by using the one or more contextual embeddings techniques.

8. The system as claimed in claim 6, wherein the step of monitoring is based on one or more associated temporal factors with one or more dynamic formats comprising at least a date, a day, time, a location, and one or more weather conditions.

9. The system as claimed in claim 7, wherein an increase in the mean and a decrease in the variance of the customer specific contextual similarity distribution indicates an increase in quality level of an intent associated with a visit to the retail store by the one or more identified customers.

10. The system as claimed in claim 8, wherein the one or more dynamic formats of the one or more associated temporal factors comprise at least one of one or more weekdays, one or more weekends, a morning, an evening, a hot climate, and a cold climate.

11. One or more non-transitory machine-readable information storage mediums comprising one or more instructions which when executed by one or more hardware processors cause comprising:
identifying, by using one or more customer recognition techniques, one or more customers in a retail store;
obtaining one or more historical baskets and one or more current baskets associated with the one or more identified customers;
applying one or more context specific filtering techniques on the one or more historical baskets based on one or more associated dynamic factor dimensions to obtain one or more filtered historical baskets;
applying one or more contextual embedding techniques on content of the one or more filtered historical baskets and the one or more current baskets associated with the one or more identified customers to obtain dynamically enriched content for the one or more filtered historical baskets and the one or more current baskets;
determining a dynamic contextual similarity between each pair amongst the one or more filtered historical baskets with the dynamically enriched content in which a contextual similarity varies based on an associated nature of the dynamically enriched content, to obtain one or more determined dynamic contextual similarities;
deriving a customer specific contextual similarity distribution of the one or more filtered historical baskets based on the one or more determined dynamic contextual similarities;
deriving a threshold based on an associated nature of the customer specific contextual similarity distribution;
passing the threshold to one or more model based reflex agents to act as a plurality of agent rules for detection of a suspicious activity during a checkout of the one or more current baskets associated with the one or more identified customers;
identifying, by using a first set of agents, the suspicious activity in at least one current basket associated with at least one identified customer from an outcome of the one or more model based reflex agents in which the one or more model based reflect agents suspect the at least one current basket based on a deviation level between the at least one current basket and the one or more historical filtered baskets as compared with the threshold;
performing, by using a second set of agents, a comparison of (i) an enriched content associated with the at least one current basket suspected by the one or more model based reflex agents with (ii) a reference enriched content of the one or more historical filtered baskets by using one or more reasoning models;
generating, by using a third set of agents, an explanation report indicating reasons for the suspicious activity based on the comparison by employing the reasoning model in which the explanation report indicates the reasons in the form of at least one of a suspected item, a suspected price, a quantity of suspected item, or in combinations thereof;
monitoring, by using a fourth set of agents, a particular point of scanning comprising a scanning of the suspected item, the quantity of suspected item, the suspected price or combinations thereof;
receiving, by using one or more learning, a plurality of information comprising suspected basket specific explanation report and associated customer profile, one or more historical transactions, one or more suspicious report from one or more video anomalies detection systems, and one or more repositories of one or more historical suspected cases, one or more actions taken against each of the one or more historical suspected cases and one or more associated customer profiles, and dynamically deciding based on the plurality of information, to enable at least one of (i) performing one or more appropriate tasks that depend on nature of reasons for suspect in association with a different source of received information, and (ii) recommending a cancelation of the transaction based on nature of severity of reasons.

12. The one or more non-transitory machine-readable information storage mediums as claimed in claim 11, wherein
a variance of the customer specific contextual similarity distribution is minimized, and a mean of the customer specific contextual similarity distribution is maximized by applying (i) one or more filtering techniques on the one or more historical baskets with respect to one or more associated context dimensions and (ii) enriching the content of the one or more filtered historical baskets and at least one current basket using the one or more contextual embedding techniques, and
an accuracy of explanation report with reasons for suspect is improved by increasing in quality level of an intent associated with the visit to the retail store by the one or more identified customers by enriching the content of (a) the one or more filtered historical baskets and (b) the at least one current basket by using the one or more contextual embeddings techniques.

13. The one or more non-transitory machine-readable information storage mediums as claimed in claim 11, wherein the step of monitoring is based on one or more associated temporal factors with one or more dynamic formats comprising at least a date, a day, time, a location, and one or more weather conditions.

14. The one or more non-transitory machine-readable information storage mediums as claimed in claim 12, wherein an increase in the mean and a decrease in the variance of the customer specific contextual similarity distribution indicates an increase in quality level of an intent associated with a visit to the retail store by the one or more identified customers.

15. The one or more non-transitory machine-readable information storage mediums as claimed in claim 13, wherein the one or more dynamic formats of the one or more associated temporal factors comprise at least one of one or more weekdays, one or more weekends, a morning, an evening, a hot climate, and a cold climate.
